# EUROPÄISCHE PATENTSCHRIFT

(11) **EP 1 588 839 B1**
(45) Veröffentlichungstag und Bekanntmachung des Hinweises auf die Patenterteilung: **11.06.2008**
(21) Anmeldenummer: 05007637.1
(22) Anmeldetag: 07.04.2005
(51) Int. Cl.: B32B 15/06, B32B 15/18, B32B 25/14, C08L 9/02

(54) **Schichtförmiges Dichtungsmaterial aus Gummi und Metall**
Multilayer gasket material comprising rubber and metal
Matériau de joint stratifié en caoutchouc et métal

(30) Priorität: 13.04.2004 JP 2004118033
(43) Veröffentlichungstag der Anmeldung: 26.10.2005
(73) Patentinhaber: Carl Freudenberg KG, 69469 Weinheim (DE)
(72) Erfinder: Kanamori, Masaaki, Ibaraki 300-4247 (JP); Yokota, Atsushi, Ibaraki 300-4247 (JP); Nakagome, Seiji, 964-8533 Fukushima (JP)

(56) Entgegenhaltungen:
- EP-A- 0 320 287
- EP-A- 0 351 498
- EP-A- 0 642 920
- DE-A1- 2 805 986

## Beschreibung

### Technisches Gebiet

Die vorliegende Erfindung bezieht sich auf schichtförmiges Dichtungsmaterial aus Gummi und Metall, genauer auf schichtförmiges Dichtungsmaterial aus Gummi und Metall, welches angemessen für Metalldichtungen in Motoren eingesetzt wird.

### Stand der Technik

Als Metalldichtungen, mit denen Motoren von Kraftfahrzeugen ausgestattet werden, aus Metalldichtungsmaterialien, für Motoren, bei denen eine hohe Beständigkeit gegen Wasser, LLC (long-life coolant, Kühlmittel für verlängerte Wechselintervalle) notwendig sind, werden allgemein beschichtete Edelstahlplatten verwendet, bei denen auf die Edelstahlplatte eine Schicht Gummi aufgetragen wird. Wird jedoch auf die Edelstahlplatte direkt das Mittel für die Vulkanisierung verwendet, so ist auch bei einer direkten Verklebung mit Gummi die Klebebeständigkeit gegen FlüssigKeit schlecht, und bei der Verbundplatte aus Gummi und Metall kommt es bei Eintauchversuchen in Wasser oder LLC zu einer Ablösung der Klebeverbindung.

Als Gegenmaßnahmen dazu sind allgemein Dichtungsmaterialien bekannt, bei denen eine Haut durch Chromierung aufgetragen wird, die aus einer Chromverbindung. Phosphorsäure, Si etc. besteht, und dann auf diese chromierte Haut eine Gummischicht aufgetragen wird. Bei solchen Materialien für Dichtungen lassen die Hitzebeständigkeit und auch die Klebebeständigkeit nicht nach, selbst wenn sie über einen längeren Zeitraum in einer Umgebung eingesetzt werden, in der sie mit Frostschutzmittel in Berührung kommen, d.h. sie sind hervorragend bezüglich Beständigkeit gegen Frostschutzmittel geeignet und werden daher auch herkömmlich in weiten Bereichen angewendet. Auch der Anmelder hat bereits eine Verbesserung der Beständigkeit gegenüber Wasser, LLC, etc. vorgelegt, bei der als erstes als Vorbehandlung ein Kleber aufvulkanisiert wird und dann auf die Edelstahlplatte eine Chrombehandlung mittels Auftragung durchgeführt wird.
Patentdokument 1: Japanische Patentnummer 2000-006307
Patentdokument 2: Japanische Patentnummer 1999-221875

Jedoch ist die Chrombehandlung durch Auftragen aus ökologischer Sicht nicht wünschenswert, da Cr⁶⁺-lonen enthalten sind. Das sechswertige Chrom hat nämlich den Nachteil, dass es auf den menschlichen Körper direkt einen schlechten Einfluss ausübt, und dass ferner Abwasser, welches mit sechswertigem Chrom belastet ist, einer speziellen Behandlung gemäß dem (japanischen) Gesetz zur Vermeidung von Wasserverschmutzung unterzogen werden muss, und dass entsorgte Edelstahlplatten, bei denen eine Chrombehandlung mittels Auftragung durchgeführt wurden, nicht wieder verwendet werden können. Darüber hinaus ist es wahrscheinlich, dass durch den Kontakt mit Öl und Frostschutzmittel das Chrom in der durch Chromierung aufgetragenen Haut extrahiert wird.

Dem gegenüber sind verschiedene Grundierungen für das Aufvulkanisieren von Klebern, bei denen Phenolharze als Grundlage verwendet werden, handelsüblich erhältlich, aber diese weisen keine genügende Klebebeständigkeit und Wasserbeständigkeit beim Verkleben mit Edelstahl auf.

Andererseits werden als chromfreie Dichtungen in Patentdokument 3 ein Metalldichtungsmaterial, welches auf der Oberfläche der Edelstahlplatte eine Grundierung aus Silika/Alumina-Kondensat ausgebildet hat, ferner in Patentdokument 4 ein Material für Dichtungen, bei dem eine Haut aus dem Polymer Bisphenol-A-Novolak, welches über einen Säurebestandteil, Kieselsäure, eine Titanverbindung und eine wasserlösliche, stickstoffhaltige Substitutionsgruppe verfügt, vorgelegt, aber bei einem Einsatz in feuchter Umgebung wie u.a. bei Motoren von Kraftfahrzeugen, kommt es bei längerem Gebrauch leicht zu Ablösungen bei der Klebeoberfläche der befeuchteten Stelle und ferner kommt es leicht zu Ablösungen durch thermalen Abbau, da sie im Bereich der Zylinderschläuche hohen Temperaturen ausgesetzt sind, so dass bisher noch nicht die gleiche Funktionalität wie bei Dichtungen mit Chromierung durch Auftragen erreicht werden konnte.
Patentdokument 3: Japanische Patentnummer 2003-028307
Patentdokument 4: ebenso 2003-105321

### Aufgabe

Folglich wird eine Dichtung gefordert, die über gleiche oder bessere Temperaturbeständigkeit und Haftfestigkeit verfügt als die Dichtungen mit Chromierung durch Auftragung, bei gleichzeitiger Beständigkeit gegen Wasser und Frostschutzmittel, und bei der auch keine ökologischen Probleme entstehen.

Ziel der vorliegenden Erfindung ist es, ein schicht-förmiges Dichtungsmaterial aus Gummi und Metall vorzulegen, bei dem bei einem schichtförmigen Dichtungsmaterial aus Gummi und Metall, welches aus einer Zusammensetzung von Gummi und Edelstahlplatten gebildet wird, das Metall nicht vorbehandelt wird durch Chromierung mittels Auftragung, und das trotzdem eine hervorragende LLC-Beständigkeit (Beständigkeit gegen Frostschutzmittel) und Hitzebeständigkeit aufweist, und bei dem es auch bei Versuchen zur LLC-Beständigkeit, die in realen Einsatzumgebungen von Metalldichtungen z.B. für Motoren durchgeführt werden, zu keiner Ablösung der Aufklebung kommt.

### Darstellung der Erfindung

Das Ziel der vorliegenden Erfindung wird durch ein schichtförmiges Dichtungsmaterial aus Gummi und Metall erreicht, bei dem eine Gummimischung aus 92 bis 50 Gewichtsprozent NBR und 8 bis 50 Gewichtsprozent eines Gummis mit einer höheren Hitzebeständigkeit als NBR auf eine nicht mit Chrom vorbehandelte Edelstahlplatte mittels eines kieselerdehaltigen Phenolharzklebers aufvulkanisiert wird.

Als Ergebnis der Untersuchungen der Erfinder stellte sich heraus, dass bei schichtförmigen Dichtungsmaterialien aus Gummi und Metall durch die Exposition in der Atmosphäre bei hohen Temperaturen zusätzlich zur Abnahme der Haftfestigkeit an den Berührungsflächen metallene Grundschicht/Kleberschicht/Gummischicht die Verfestigung durch thermalen Abbau der Gummischicht sehr rasch voranschreitet. Durch diese Verfestigung wird die Gummischicht sehr elastisch, d.h. sie verliert ihre Gummielastizität, so dass sich das geringe Durchbiegen durch jeden Wärmezyklus nicht rückgängig machen lässt und sie dann zerstört wird.

Folglich ist für die Verbesserung der Hitzebeständigkeit des Dichtungsmaterials mit diesem Aufbau ein Dichtungsmaterial wirkungsvoll, bei dem die Verfestigung der Gummischicht unterdrückt wird. Daher wird bei der vorliegenden Erfindung bei dem NBR-Kautschuk in relativ geringen Mengen ein Gummi hinzugefügt, der über eine höhere Hitzebeständigkeit als dieser verfügt, wodurch die Hitzebeständigkeit der Gummischicht verbessert wird und dadurch ein Material erhalten wird, bei dem die Gummischicht nur schwer verfestigt, auch wenn es bei hohen Temperaturen der Atmosphäre ausgesetzt ist. Ferner wird durch den Zusatz von Kieselerde im Phenolharzkleber die Haftfestigkeit bei den jeweiligen Berührungsflächen, besonders aber zwischen der metallenen Grundschicht und der Kleberschicht härter und damit die Beständigkeit gegenüber dem Frostschutzmittel verbessert.

Das schichtförmige Dichtungsmaterial aus Gummi und Metall gemäß der vorliegenden Erfindung wird ohne die für den Menschen schädliche Chromierung hergestellt, und verwendet als wesentlichen Gummibestandteil den kostengünstigen NBR-Kautschuk, und kann auch beim Einsatz im Bereich von Motoren von Kraftfahrzeugen die gleiche Beständigkeit gegenüber Hitze und Frostschutzmitteln erzielen, wie Metalldichtungen mit Chromierung durch Auftragung, so dass es auch als Maßnahme gegenüber gesellschaftlichen Fragen wie Umweltschutz oder Recycling sehr effizient ist und auch einen großen praktischen Nutzen hat

Für die Edelstahlplatten werden SUS301, SUS301 H, SUS304, SUS430 etc. verwendet. Die Materialdicke ist für die Verwendung als Metalldichtung geeignet, wobei allgemein solche mit einer Dicke von 0,1 bis 2 mm verwendet werden. Als solche Edelstahlplatten werden allgemein handelsübliche Edelstahlplatten mit fertiger Grundierung ohne Chrom verwendet. Wünschenswert ist, dass in diesen Grundierungsmitteln organische Silikonverbindungen, Titanverbindungen oder Zirkonium- verbindungen enthalten sind.

Auf diese Edelstahlplatte ohne Chrombehandlung wird ein Phenolharzkleber mit Kieselerde aufgetragen. Das Phenolharz im Kleber trägt hauptsächlich zur Verbesserung der Haftfestigkeit des Gummis bei, und der Kieselerdeanteil geht u.a. mit der organischen Silikonverbindung in der Grundierungsschicht eine Verbindung ein und trägt damit zur Verbesserung des Haftvermögens und der Haftfestigkeit mit der metallenen Grundplatte bei, und bewirkt somit eine verbesserte Beständigkeit gegenüber dem Frostschutzmittel. Ferner können dem Kleber zusätzlich dazu auch geringe Gummianteile (NBR, Fluorgummi, chlorierter Gummi) oder Kunstharzanteile zugefügt werden.

Als Phenolharzkleber können Phenolharzkleber, die beim Aufvulkanisieren von NBR auf Edelstahl verwendet werden, wie z.B.
■ die Zusammensetzung eines vulkanisierten Klebers, der Resol-Typ Phenolharz, Novolak-Typ Phenolharz, NBR-Rohkautschuk und chloriertes Polyethylen enthält,
■ Kleber, denen zusätzlich zur o.e. Zusammensetzung eines vulkanisierten Klebers noch Phenol-Xylyl-Harz oder Phenol-Biphenyl-Harz hinzugefügt wurden
■ die Zusammensetzung eines vulkanisierten Klebers, der als Klebebestandteile Novolak-Typ Phenolharz, welches aus einem Gemisch aus m-Kresol und p-Kresol gewonnen wurde und als Härtemittel Resol-Typ Phenolharz beigefügt wurden
■ die Zusammensetzung eines vulkanisierten Klebers bestehend aus der Lösung eines organischen Lösungsmittels von Novolak-Typ Phenolharz. Resol-Typ Phenolharz und Bisphenol-A-Epoxidharz
■ die Zusammensetzung eines vulkanisierten Klebers, der als Klebebestandteil eine Mischung aus Novolak-Typ und aus Bisphenol-A abgeleitetem Resol-Typ Phenolharz und als Härtungsmittel ein Silan-Haftvermittler mit einer Epoxidgruppe beigefügt wurden
■ die Zusammensetzung eines vulkanisierten Klebers, die Novolak-Typ Phenolharz, Novolak-Typ Epoxidharz und als Härtebeschleuniger eine Imidazolverbindung oder eine tertiäre Aminverbindung enthält
■ die Zusammensetzung eines vulkanisierten Klebers bestehend aus einer Lösung eines organischen Lösungsmittels oder einer Dispersionsflüssigkeit von Resol-Typ Phenolharz, NBR-Rohkautschuk und chloriertem Polyethylen
■die Zusammensetzung eines Klebers, der Resol-Typ Phenol-Aldehyd-Harze Butylether und Novolak-Typ Phenol-Aldehyd-Harze beinhaltet
■ ein vulkanisierter Kleber, der ein Kondensationsharz von Novolak-Typ Phenolharz, aromatischem Alkylether und Phenol und ein Härtungsmittel enthält
verwendet werden, wobei es wünschenswert ist, dass solche verwendet werden, die aus einem Verhältnis von 9:1 bis 1:9 Novolak-Typ Phenolharz und Resol-Typ Phenolharz zusammengesetzt sind. Ferner können handelsübliche Produkte wie Thixon 715 von der Firma Rohm and Haas, TS1677-13 von Lord Far East Inc., oder Metaloc N-31 von Töyö Chemical Laboratory verwendet werden.
Patentdokument 5: Japanische Patentnummer 2003-261850
Patentdokument 6: Japanische Patentnummer 2003-147314
Patentdokument 7: Japanische Patentnummer 2000-17247
Patentdokument 8: Japanische Patentnummer 2000-1658
Patentdokument 9: Japanische Patentnummer 1999-1672
Patentdokument 10: Japanische Patentnummer 1998-121020
Patentdokument 11: Japanische Patentnummer 1994-306340
Patentdokument 12: Japanische Patentnummer 1991-62876
Patentdokument 13: Japanische Patentnummer 1988-295691

Bei diesen Phenolharzklebern für den NBR-Kautschuk wird Kieselerde beigefügt. Als Kieselerde können kollodiale Kieselerde, Dampf-Silika, Organo Silikasol, etc. angegeben werden, aber hinsichtlich der Dispersions-fähigkeit in der verwendeten Aufbereitungsflüssigkeit ist es wünschenswert, Organo Silikasol zu verwenden. Als Organosilikasol können u.a. die handelsüblichen Produkte Methanol Silikasol (Hersteller: Nissan Chemical Industries, Ltd., wird in Methanol verteilt), Snowtex IPA-ST (gleicher Hersteller, wird in IsopropylAlkohol verteilt), Snowtex EG-ST (gleicher Hersteller, wird in Ethylenglykol verteilt), Snowtex MEK-ST (gleicher Hersteller, wird in Methyl-Ethyl-Keton verteilt), Snowtex MIBK-ST (gleicher Hersteller, wird in Methyl-Isobutyl-Keton verteilt), etc. verwendet werden. Als kollodiale Kieselerde können z.B. die handelsüblichen Produkte Snowtex C (gleicher Hersteller), Snowtex 0 (gleicher Hersteller), Snowtex N (gleicher Hersteller). Snowtex S (gleicher Hersteller), Snowtex UP (gleicher Hersteller), Snowtex PS-M (gleicher Hersteller); Snowtex PS-L (gleicher Hersteller), Snowtex 20 (gleicher Hersteller), Snowtex 30 (gleicher Hersteller), Snowtex 40 (gleicher Hersteller), etc. verwendet werden. Als Dampf-Silika können ferner z.B. die handelsüblichen Produkte Aerosil 50 (Hersteller. Aerosil), Aerosil 130 (gleicher Hersteller). Aerosil 200 (gleicher Hersteller), Aerosil 300 (gleicher Hersteller), Aerosil 380 (gleicher Hersteller), Aerosil TT600 (gleicher Hersteller), Aerosil MOX80 (gleicher Hersteller), Aerosil MOX170 (gleicher Hersteller), etc. verwendet werden.

Die Kieselerde wird zu mindestens 5 Gewichtsprozent der Festanteile des Phenolharzwebers eingesetzt, wobei 5 bis 50 Gewichtsprozent wünschenswert sind, und ein Anteil von 5 bis 30 Gewichtsprozenten noch wünschenswerter ist, und der Kleber wird so als Lösung eines organischen Lösungsmittels eingestellt, dass die Konzentration der Festanteile 0,1 bis 10 Gewichtsprozent beträgt. Durch den Zusatz von Kieselerde wird die Haftfestigkeit zwischen Grundierungsschicht und der aufvulkanisierten Kleberschicht stärker. Wird die Kieselerde in einem Verhältnis von mehr als 50 Gewichtsanteilen eingesetzt, kommt es zu einem Absinken der Hitzebeständigkeit, denn es kommt zu Ablösungen der Verklebung beim Biegeversuch nach dem Erhitzen mit Heißluft. Andererseits wird die Beständigkeit gegen Flüssigkeiten wie Wasser und LCC verschlechtert, wenn keine Kieselerde verwendet wird. Als organische Lösungsmittel werden Alkohole wie Methanol, Ethanol, Isopropanol oder Ketone wie Aceton, Methylethylketon, Methylisobuthylketon verwendet.

Der kieselerdehaltige Phenolharzkleber, bei dem die o.e. Bestandteile essentiell sind, wird mittels Eintauchen, Aufsprühen, Pinsel oder Walzlackierung in einer Stärke von 0,1 bis 20 µm aufgetragen, bei Zimmertemperatur oder durch eine Warmluftströmung getrocknet, und danach bei einer Temperatur von 100 bis 250°C eingebrannt.

Auf diese auf solcherart ausgebildete kieselerdehaltige Phenolharzkleberschicht wird eine vulkanisierte Kleberschicht einer Gummimischung, die aus NBR und aus einem Gummi mit einer höheren Hitzebeständigkeit als NBR hat, ausgebildet. Hierbei ist ein Gummi mit einer höheren Hitzebeständigkeit als NBR ein Gummi, dessen Hitzebeständigkeit höher ist als die von NBR hinsichtlich der Oxidationsbeständigkeit, wobei konkret u.a. Acrylgummi, hydrierter NBR, EPDM und Fluorgummi angegeben werden können.

Als hydrierter NBR wird hydrierter NBR mit einem beliebigen Hydrierungsgrad und einer wünschenswerten Iodzahl von 30 mg/100 mg oder darunter verwendet, wobei praktisch u.a. die handelsüblichen Produkte der Zetpol Serie von der Firma Zeon Corporation ohne Änderungen verwendet werden können. Als Acrylgummi können Copolymere, bei denen Alkyl-Acrylat mit einer Alkylgruppe von 1 bis 4 Kohlenstoffen, oder Alkoxy-Alkyl-Acrylat mit 2 bis 8 Kohlenstoffen, ungesättigte Monomere, die vernetzte Gruppen wie Chlor, Carboxyl-Gruppen, Wasserstoff-Gruppen, Epoxidruppen, Dien, etc. copolimerisiert wurden, oder ternäre Copolymere aus ungesättigten Monomeren, die Ethylen-Alkyl-Acrylat-Carboxyl enthalten, verwendet werden, wobei die handelsüblichen Produkte der Noxtite Serie der Fa. Unimatec Corporation ohne Änderungen verwendet werden können. Als EPDM kann aus beliebigen Dienkomponenten copolymerisiertes EPDM verwendet werden, wobei praktisch u.a. die handelsüblichen Produkte der EP Serie der Firma JSR oder die Mitsui EPT Serie der Firma Mitsui Chemicals ohne Änderungen verwendet werden können. Als Fluorgummi können ferner z.B. Vinyliden-Fluarid/Hexa-Fluaropropen Copolymer, das ternäres Copolymer Vinyliden-Fluorid/Hexa-Fluoropropen/Tetra-Fluoro-Ethylen, Tetra-Fluoro-Ethylen-Perfluoro(Alkyl-Vinylether)Copolymer, das ternäre Copolymer Tetra-Fluoro/Ethylen/Vinyliden-Fluorid-Propylen, das ternäre Copolymer Tetra-Fluoro/Ethylen/Vinyliden-Fluorid/Perfluoro(Alkyl-Vinylethyl) angegeben werden, wobei die handelsüblichen Produkte ohne Änderungen verwendet werden können.

NBR und der Gummi mit einer höheren Hitzebeständigkeit als NBR werden in einer Mischung von 92 bis 50 Gewichtsprozent NBR, wobei 90 bis 60 Gewichtsprozent wünschenswert sind, zu 8 bis 50 Gewichtsprozent zweiter Gummi, wobei 10 bis 40 Gewichtsprozent wünschenswert sind, verwendet. Bei einem geringem Mischungsverhältnis des zweiten Gummis wird die verbesserte Wirkung der Hitzebeständigkeit, die das Hauptziel der vorliegenden Erfindung ist, nicht erreicht, und wird andererseits ein höheres Mischungsverhältnis eingesetzt, so erhöhen sich dadurch nicht nur die Kosten, sondern es verschlechtern sich auch die Eigenschaften bezüglich Druckbeständigkeit und Dehnungsrest, wodurch sich die vorgegebenen Spezifikationen nicht mehr erfüllen lassen.

Als Mischmethode werden Verfahren eingesetzt, bei denen eine Gummimasse mit einem vorgegebenen Mischungs-verhältnis vermischt wird und danach als Gummilösung eingestellt wird, oder Verfahren, bei denen die NBR Lösung mit einer Lösung aus sehr hitzebeständigem Gummi vermischt wird. Die Lösung der Gummimischung wird auf die Klebeschicht aufgetragen und nach dem Trocknen und durch Pressen und Vulkanisieren bei ca. 200 bis 240°C für 20 bis 120 Sekunden ein schichtförmiges Dichtungsmaterial aus Gummi und Metall ausgebildet, welches hitzebeständiger ist als herkömmliche chromfreie Dichtungen, und folglich auch stärker ist gegenüber dem thermalen Abbau im Bereich der Zylinderöffnungen.

### Ausführungsbeispiele

Im Folgenden wird die vorliegende Erfindung an Hand von Ausführungsbeispielen erläutert.

### Ausführungsbeispiel 1

Nach der alkalischen Entfettung der Edelstahlplatte wird unter Verwendung von entionisiertem Wasser die Oberflächenaufbereitungsflüssigkeit aus 60 g H₂TiF₆, 10 g H₂ZrF₆, 6,4 g kollodialer Kieselerde, 50 g Aminomethyl-Substitution-Polyvinylphenol und 50 g Propoxypropanol in einer Dicke von 0,2 g/m² aufgetragen, danach bei 100°C 1 Minute getrocknet, und so eine Edelstahlplatte ohne Chrombehandlung erhalten, bei der die Oberfläche mit einer Zirkonium-Titanium Oberflächenbehandlungsflüssigkeit behandelt wurde. Die so erhaltene Edelstahlplatte wurde in die Lösung des Klebers mit nachfolgender Zusammensetzung eingetaucht, herausgenommen, bei Zimmertemperatur getrocknet und dann bei 200°C eingebrannt.

| | |
|---|---|
| Phenolharzkleber | 12 GT |
| (Hersteller. Rohm and Haas. Sixon 715-A) | |
| Härtungsmittel mit Hexa-Methylen- | 0,4 GT |
| Tetramin (gleicher Hersteller, Sixon 715-B) | |
| Organo Silikasol (in Methyl-Ethyl-Keton verteilt, 30 Gewichtsprozent Konzentration in Festanteil) | 2,5 GT |
| Folgende NBR Lösung | 6 GT |
| Methyl-Ethyl-Keton | 351 GT |

| | |
|---|---|
| GT = Gewichtsteile | |

Als Lösung des Nitrilkautschukgemisches wurden folgende Bestandteile verwendet

| | |
|---|---|
| (Nitnlkautschukgemisch Lösung) | |
| Nitrilkautschuk (Hersteller: JSR, N235) | 100 GT |
| SRF Industrieruß | 80 GT |
| Kalziumkarbonat | 80 GT |
| Kieselerde | 20 GT |
| Zinkweiß | 5 GT |
| Oxidationsinhibitor (Hersteller: | 2 GT |
| Ouchishinko Chemir-al Industrial CO., LTD, | |
| Nocrac 224) | |
| Triallyl Isocyanurat | 2 GT |
| 1,3-Bis(tert-Butyl-peroxid)Isoprypyl- | 2,5 GT |
| Benzol | |
| Weichmacher (Hersteller: Bayer, | 5 GT |
| Bukanol OT) | |

100 Gewichtsteile der Mischung mit den o.e. Bestandteilen wurden in 300. Gewichtsteilen einer Lösung mit der Mischung Methylbenzol-Methyl-Ethyl-Keton (Verhältnis 9:1) aufgelöst (Konzentration im Festanteil 25 Gewichtsprozent).

Nach dem Einbrennen wurde eine Methylbenzollösung (Konzentration in Festanteil 20 Gewichtsprozent) von dem Gummigemisch mit der nachfolgenden Zusammensetzung aufgetragen, bei Raumtemperatur getrocknet, und dann bei 220°C und für 30 Sekunden gepresst und vulkanisiert und so der schichtförmige Werkstoff aus Gummi und Metall gebildet.

| | |
|---|---|
| NBR (Hersteller: JSR, N237) | 70 GT |
| Hydrierter NBR (Hersteller: Zeon, | 30 GT |
| Zetpol 2000, lodzahl ≤ 7/100 mg) | |
| HAF Industrieruß | 80 GT |
| Pulverförmige Kieselerde | 60 GT |
| Zinkoxid | 5 GT |
| Stearinsäure | 1 GT |
| Oxidationsinhibitor (Hersteller: | 1 GT |
| Ouchishinko Chemical Industrial CO., LTD, | |
| ODA-NS) | |
| Organisches Peroxid (Hersteller: | 6 GT |
| NOF Corporation, Perhexa 25B) | |
| N,N-m-Phenylen-di-malemid | 1 GT |

### Ausführungsbeispiel 2

Gegenüber dem Ausführungsbeispiel wurde eine Edelstahlplatte ohne Chrombehandlung der Firma Nissin verwendet, und es wurden bei der Zusammensetzung der Gummimischung 80 Gewichtsteile NBR und 20 Gewichtsteile hydrierter NBR verwendet.

### Ausführungsbeispiel 3

Gegenüber dem Ausführungsbeispiel 1 wurden bei der Zusammensetzung der Gummimischung 60 Gewichtsteile NBR und 40 Gewichtsteile hydrierter NBR verwendet.

### Ausführungsbeispiel 4

Gegenüber dem Ausführungsbeispiel 1 wurden bei der Zusammensetzung der Gummimischung 90 Gewichtsteile NBR, und an Stelle des hydrierten NBR 10 Gewichtsteile Acrylgummi (Hersteller: Unimatec Corporation, Noxtite PA-302) verwendet.

### Ausführungsbeispiel 5

Gegenüber dem Ausführungsbeispiel 1 wurde bei der Zusammensetzung der Gummimischung an Stelle des hydrierten NBR in gleicher Menge (30 Gewichtsteile) EPDM (Hersteller: JSR, EP33) verwendet.

### Ausführungsbeispiel 6

Gegenüber dem Ausführungsbeispiel 5 wurde eine Edelstahlplatte ohne Chrombehandlung der Firma Nissin verwendet, und es wurden bei der Zusammensetzung der Gummimischung 80 Gewichtsteile NBR und 20 Gewichtsteile EPDM verwendet

### Ausführungsbeispiel 7

Gegenüber dem Ausführungsbeispiel 5 wurden bei der Zusammensetzung der Gummimischung 60 Gewichtsteile NBR und 40 Gewichtsteile EPDM verwendet.

### Ausführungsbeispiel 8

Gegenüber dem Ausführungsbeispiel 5 wurden bei der Zusammensetzung der Gummimischung 80 Gewichtsteile NBR und 20 Gewichtsteile eines anderen EPDM (Hersteller: JSR, EP27) verwendet.

### Referenzbeispiel

Gegenüber dem Ausführungsbeispiel 1 wurde als Stahlplatte eine Edelstahlplatte mit Chromierung durch Auftragung verwendet, und keine Gummimischung, sondern 100 Gewichtsteile NBR und kein hydrierter NBR verwendet

Die Bewertung der durch o.e. Ausführungsbeispiele und das Referenzbeispiel erhaltenen schichtförmigen Werkstoffe aus Gummi und Metall erfolgte nach den nachfolgenden Punkten.

### Hitzebeständigkeit

Nachdem die Probe 100 Stunden bei 150, 165 oder 200°C der Atmosphäre ausgesetzt war, wird der Schältest mit Klebeband Nr. 5 nach JIS K 5400 durchgeführt und nach diesen Kriterien bewertet.
Beständigkeit gegen Frostschutzmittel
Die Probe wurde in die Kühlflüssigkeit (JCC 310) eingetaucht, 100 Stunden darin belassen und danach wird der Schältest mit Klebeband Nr. 5 nach JIS K 5400 durchgeführt und nach diesen Kriterien bewertet.

Die erhaltenen Ergebnisse sind in der nachfolgenden Tabelle 1 dargestellt.

**Tabelle 1**

| | Bewertung Hitzebeständigkeit | | | | Bewertung Beständigkeit gegen Frostschutzmittel | |
|---|---|---|---|---|---|---|
| Ausführungs-Beispiel | Ausgang | 150°C | 165°C | 200°C | Ausgang | Nach Eintauchen |
| 1 | 10 | 10 | 10 | 10 | 10 | 10 |
| 2 | 10 | 10 | 10 | 10 | 10 | 10 |
| 3 | 10 | 10 | 10 | 10 | 10 | 10 |
| 4 | 10 | 10 | 10 | 10 | 10 | 10 |
| 5 | 10 | 10 | 10 | 10 | 10 | 10 |
| 6 | 10 | 10 | 10 | 10 | 10 | 10 |
| 7 | 10 | 10 | 10 | 10 | 10 | 10 |
| 8 | 10 | 10 | 10 | 10 | 10 | 10 |
| Referenz | 10 | 10 | 10 | 9 | 10 | 10 |

### Vergleichsbeispiel 1

Gegenüber dem Ausführungsbeispiel 1 wurde kein Gummigemisch, sondern 100 Gewichtsteile NBR und kein hydrierter NBR verwendet.

### Vergleichsbeispiel 2

Gegenüber dem Ausführungsbeispiel 1 wurden bei der Zusammensetzung der Gummimischung 95 Gewichtsteile NBR und 5 Gewichtsteile hydrierter NBR verwendet.

### Vergleichsbeispiel 3

Gegenüber dem Ausführungsbeispiel 1 wurde eine Kleberlösung verwendet, der kein Organo Silikasol beigefügt wurde.

### Vergleichsbeispiel 4

Gegenüber dem Ausführungsbeispiel 1 wurde als Kleberlösung eine Methanollösung eines Silan-Haftvermittlers (Hersteller: Nippon Unicar Co., Ltd., APZ6633) verwendet.

### Vergleichsbeispiel 5

Gegenüber dem Ausführungsbeispiel 5 wurden bei der Zusammensetzung der Gummimischung 95 Gewichtsteile NBR und 5 Gewichtsteile EPDM verwendet.

### Vergleichsbeispiel 6

Gegenüber dem Ausführungsbeispiel 5 wurde eine Kleberlösung verwendet, der kein Organo Silikasol beigefügt wurde.

### Vergleichsbeispiel 7

Gegenüber dem Ausführungsbeispiel 5 wurde als Kleberlösung eine Mothanollösung eines Silan-Haftvermittlers (APZ6633) verwendet.

Die Ergebnisse der Bewertung der Hitzebeständigkeit und Beständigkeit gegenüber Frostschutzmittel bezüglich des durch die o.e. Vergleichsbeispiele erhaltenen schichtförmigen Materialien aus Gummi und Metall sind in der nachfolgenden Tabelle 2 dargestellt.

**Tabelle 2**

| | Bewertung Hitzebeständigkeit | | | | Bewertung Beständigkeit gegen Frostschutzmittel | |
|---|---|---|---|---|---|---|
| Vergleichs-Beispiel | Ausgang | 150°C | 165°C | 200°C | Ausgang | Nach Eintauchen |
| 1 | 10 | 3 | 1 | 2 | 10 | 10 |
| 2 | 10 | 4 | 1 | 2 | 10 | 10 |
| 3 | 10 | 7 | 6 | 9 | 10 | 2 |
| 4 | 10 | 8 | 7 | 8 | 10 | 0 |
| 5 | 10 | 4 | 1 | 1 | 10 | 10 |
| 6 | 10 | 6 | 6 | 9 | 10 | 1 |
| 7 | 10 | 7 | 6 | 8 | 10 | 0 |

## Patentansprüche

1. Schichtförmiges Dichtungsmaterial aus Gummi und Metall, bei dem eine Gummimischung aus 92 bis 50 Gewichtsprozent NBR und 8 bis 50 Gewichtsprozent eines Gummis mit einer höheren Hitzebeständigkeit als NBR auf eine nicht mit Chrom vorbehandelte Edelstahlplatte mittels eines kieselerdehaltigen Phenolharzklebers aufvulkanisiert wird.

2. Schichtförmiges Dichtungsmaterial aus Gummi und Metall gemäß Anspruch 1, bei dem der Gummi mit einer höheren Hüzebeständigkeit als NBR hydrierter NBR, Acrylgummi, EPDM oder Fluorgummi ist.

3. Schichtförmiges Dichtungsmaterial aus Gummi und Metall gemäß einem der Ansprüche 1 oder 2, bei dem unter dem Phenolharzkleber ein Kleber verwendet wird, bei dem Kieselerde in einem Verhältnis enthalten ist, das 5 bis 50 Gewichtsprozent seines Festanteils einnimmt.

4. Schichtförmiges Dichtungsmaterial aus Gummi und Metall gemäß einem der Ansprüche 1, 2 oder 3, welches als Metalldichtung in Motoren verwendet wird.

## Claims

1. Multilayer gasket material comprising rubber and metal, in which a rubber mixture comprising 92 to 50 percent by weight of NBR and 8 to 50 percent by weight of a rubber having a higher heat resistance than NBR is vulcanized by means of a silica-containing phenol resin adhesive onto a stainless steel plate which has not been pretreated with chromium.

2. Multilayer gasket material comprising rubber and metal according to Claim 1, in which the rubber having a higher heat resistance than NBR is hydrogenated NBR, acrylic rubber, EPDM or fluorine rubber.

3. Multilayer gasket material comprising rubber and metal according to either of Claims 1 and 2, in which an adhesive in which silica is present in a ratio which accounts for 5 to 50 percent by weight of its solids content is used as the phenol resin adhesive.

4. Multilayer gasket material comprising rubber and metal according to any of Claims 1, 2 and 3, which is used as a metal gasket in engines.

## Revendications

1. Matériau d'étanchéité en forme de couche de caoutchouc et de métal, dans lequel un mélange de caoutchouc constitué de 92 à 50 pour cent en poids de NBR et de 8 à 50 pour cent en poids d'un caoutchouc à meilleure tenue à la chaleur que le NBR est vulcanisé sur une plaque d'acier allié non prétraité au chrome, au moyen d'un adhésif à résine phénolique contenant de la silice.

2. Matériau d'étanchéité en forme de couche de caoutchouc et de métal selon la revendication 1, dans lequel le caoutchouc à meilleure tenue à la chaleur que le NBR est un NBR hydrogéné, un caoutchouc acrylique, l'EPDM ou un caoutchouc fluoré.

3. Matériau d'étanchéité en forme de couche de caoutchouc et de métal selon l'une des revendications 1 ou 2, qui utilise comme adhésif à résine phénolique un adhésif qui contient de la silice dans une proportion de 5 à 50 % en poids de sa teneur en solides.

4. Matériau d'étanchéité en forme de couche de caoutchouc et de métal selon l'une des revendications 1, 2 ou 3, utilisé comme joint d'étanchéité métallique dans des moteurs.
